# EUROPÄISCHE PATENTSCHRIFT

(11) **EP 2 982 462 B1**
(45) Veröffentlichungstag und Bekanntmachung des Hinweises auf die Patenterteilung: **16.10.2019**
(21) Anmeldenummer: 15174064.4
(22) Anmeldetag: 26.06.2015
(51) Int. Cl.: B22D 35/04, C04B 35/584

(54) **NITRIDGEBUNDENES SILIZIUMNITRID ALS WERKSTOFF FÜR BAUTEILE DER ALUMINIUM-GIESSEREI**
NITRIDE BONDED SILICON NITRIDE AS A MATERIAL FOR ALUMINIUM FOUNDRY COMPONENTS
NITRURE DE SILICIUM LIÉ PAR NITRURATION EN TANT QUE MATÉRIAU POUR COMPOSANTS EN FONDERIE D'ALUMINIUM

(30) Priorität: 22.07.2014 DE 102014214268
(43) Veröffentlichungstag der Anmeldung: 10.02.2016
(73) Patentinhaber: Rauschert Heinersdorf-Pressig GmbH, 96332 Pressig (DE)
(72) Erfinder: Wagner, Rolf, 95100 Selb (DE)
(74) Vertreter: Isarpatent

(56) Entgegenhaltungen:
- EP-A1- 0 377 408
- JP-A- H08 217 567
- RAMACHANDRA RAO R ET AL: "Nitride-bonded silicon nitride from slip-cast Si + Si3N4 compacts", JOURNAL OF MATERIALS RESEARCH, MATERIALS RESEARCH SOCIETY, WARRENDALE, PA, US, Bd. 17, Nr. 2, Februar 2002 (2002-02), Seiten 386-395, XP002454226, ISSN: 0884-2914

## Beschreibung

Die vorliegende Erfindung betrifft eine Vorrichtung zum Gießen von Aluminiumformteilen, Bauteile für eine Vorrichtung zum Gießen von Aluminiumformteilen, ein Verfahren zur Herstellung von Bauteilen für eine Vorrichtung zum Gießen von Aluminiumformteilen und die Verwendung von nitridgebundenem Siliziumnitrid zur Herstellung von Bauteilen für Vorrichtungen zum Gießen von Aluminiumformteilen.

### Stand der Technik

In der Aluminium-Gießereitechnik sind die keramischen Werkstoffe Aluminiumtitanat (ATi) und Siliziumnitrid/SiAlON (SN) bekannt und eingeführt. Typische Bauteile sind z.B. Steigrohre, Düsen und Portionierrohre zum Transport von flüssigem Aluminium zu formgebenden Gießformen. Aluminiumtitanat ist ein preiswerter Rohstoff auf Basis Al₂O₃ und TiO₂. Nachteilig ist seine geringe Standzeit von max. ½ Jahr, bedingt durch ein werkstoffbedingtes Risssystem, welches letztendlich zur Zerrüttung des Werkstoffes und damit zum Ausfall des Bauteils führt. Demgegenüber steht das gesinterte Siliziumnitrid bzw. SiAlON. Dieser Werkstoff zeichnet sich durch eine hohe Festigkeit und lange Standzeit aus. Gegenüber dem Aluminiumtitanat sind Bauteile aus SN jedoch bis zu einem Faktor 5 teurer. Durch die Handhabung der Bauteile in Gießereien kommt es auch zu einem vorzeitigen Versagen, so dass oft die mögliche Standzeit nicht erreicht wird. Bauteile aus ATi bzw. SN werden in der Gießereitechnik seit vielen Jahren eingesetzt.

In der Gießereitechnik werden seit Jahren verschiedene Arten an Siliziumnitrid verwendet, die sich in ihren Eigenschaften deutlich unterscheiden. Generell unterscheidet man bei Siliziumnitrid-Werkstoffen zwischen Werkstoffen auf Basis von gesintertem SN und solchen auf Basis von reaktionsgebundenem SN. Im ersteren Fall wird ein SN-Pulver mit meist oxydischen Additiven vermischt und in einem mit N2 Gasdruck beaufschlagten Prozess auf Dichten > 98 % th.D. (theoretische Dichte) gesintert. Beim reaktionsgebundenen SN, welches auch als RBSN bezeichnet wird, wird ein reines, metallische Si Pulver verwendet, welches ebenfalls mit oxydischen Additiven versetzt werden kann, um zum Beispiel die spätere Reaktion mit N2 katalysieren zu können. Es erfolgt dann kein Sinterprozess, sondern ein Reaktionsprozess unter N₂-Atmosphäre, wobei das Si Pulver unter einem stark exothermen Prozess zu Si₃N₄ umgewandelt wird.

So werden beispielsweise in der WO 88/00933 A1 Bauteile auf Basis von RBSN offenbart welches als Ausgangsbasis Si-Pulver verwendet, während K. Berroth et al.: "Silicon nitride based ceramics for foundry application" in 3rd DRACHE-Seminar Casting Techniques, Lahnstein, 2005 Werkstoffe auf Basis des klassischen Sinterprozesses basierend auf SN beschreiben sind.

In der Solartechnik wurde jüngst ein neuer Werkstoff verwendet, nämlich nitridgebundenes Siliziumnitrid (NSN), bei dem das Ausgangspulver aus einer Mischung aus SN und Si-Pulver besteht. Dort wird es im Bereich der Herstellung von Tiegel zum Aufschmelzen von Silizium verwendet, wie in WO2007/148986 offenbart. Die Tiegel werden hierbei mittels Schlickerguss hergestellt. In EP 2414566 wird der Einsatz von NSN Platten für Si-Schmelztiegel beschrieben, wobei die Fügestellen der verwendeten Platten als kritisch für den Prozess betrachtet werden. Als Beschichtungsmaterial auf graphitischen Unterlagen wird dieser Werkstoff in DE 10 2010 008089 beschrieben. Aufgrund der verschiedenen Eigenschaften von flüssigem Silizium und flüssigem Aluminium sowie der Porosität des Werkstoffs NSN kam dieser Werkstoff bisher jedoch nicht für eine Verwendung in der Aluminiumgießerei in Betracht.

In der JP H08 217567 A wird die Herstellung von Filterns und Wärmeisolatoren aus Siliziumnitrid beschrieben.

Darüber hinaus offenbart die EP 0 377 408 A1 die Herstellung von Formkörpern aus reaktionsgebundenem Siliziumnitrid.

Zudem wird in Ramachandra Rao R. et al, "Nitride-bonded silicon nitride from slip-cast Si + Si3N4 compact", Journal of Material Research, Materials Research Society, Warrendale, PA, US, Bd. 17, Nr. 2, 2002, S. 386 - 395 NSN für Hochtemperaturanwendungen vorgeschlagen.

Weiterhin sind Schmelzanlagen von Si und Gießanlagen bzw. Gießvorrichtungen zur Herstellung von Aluminiumbauteilen gänzlich verschiedene Vorrichtungen. Die Tiegel werden beim Siliziumschmelzen in Ofenanlagen eingesetzt, die zunächst blockiges Si aufschmelzen, um es dann gerichtet erstarren zu lassen. In der Aluminiumgießerei wird demgegenüber entweder flüssiges Aluminium in speziellen Behältern aufgeschmolzen oder aber in Spezialbehältern angeliefert. Die Temperatur des Aluminiums beträgt in der Regel ca. 700 bis 800 °C. Aus solchen Vorratsbehältern wird das Aluminium z.B. über Steigrohre zur Gießform geführt um hier ein entsprechendes Bauteil, wie z.B. Felgen, herzustellen. Ein Einsatz von NSN kam für diese komplexen Vorrichtungen zum Aluminiumgießen bisher nicht in Betracht.

Es ist eine Aufgabe der Erfindung, eine Vorrichtung und Bauteile für die Aluminiumgießereitechnik bereitzustellen, die wirtschaftlicher bei ausreichend langen Standzeiten operieren kann. Es ist eine weitere Aufgabe der Erfindung, eine Vorrichtung und Bauteile für die Aluminiumgießereitechnik bereitzustellen, die im Betrieb eine verbesserte Verarbeitung des flüssigen Aluminiums gewährleisten.

### Zusammenfassung der Erfindung

Die Erfinder haben herausgefunden, dass durch den Einsatz von nitridgebundenem Siliziumnitrid in Bauteilen für Vorrichtungen in der Aluminiumgießereitechnik die Kosten für die Anlage bei längerer Standzeit reduziert werden können und zudem die Verarbeitung von flüssigem Aluminium verbessert werden kann. Weiterhin wurde gefunden, dass ein flüssiges Aluminium nicht in die Poren des Werkstoffs NSN eindringen kann. Zudem wurde gefunden, dass eine gute Nichtbenetzbarkeit gegeben ist, und dass die Porosität des NSN zudem für eine gute Thermoschockbeständigkeit sorgen kann, so dass ein Einsatz als Aluminium Gießereiwerkstoff möglich ist.

Gemäß einem Aspekt betrifft die vorliegende Erfindung eine Vorrichtung zum Gießen von Aluminiumformteilen, die dazu ausgebildet ist, Aluminiumformteile herzustellen, wobei die Vorrichtung mindestens ein Bauteil aufweist, das nitridgebundenes Siliziumnitrid mit einer Dichte von 1,5 - 2,1 g/cm³ umfasst, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile umfassend nitridgebundenes Siliziumnitrid zumindest teilweise in Kontakt mit geschmolzenem Aluminium treten.

In einem weiteren Aspekt betrifft die vorliegende Erfindung ein Bauteil für eine Vorrichtung zum Gießen von Aluminiumformteilen, die dazu ausgebildet ist, Aluminiumformteile herzustellen, wobei das Bauteil nitridgebundenes Siliziumnitrid mit einer Dichte von 1,5 - 2,1 g/cm³ umfasst oder aus diesem bestehtund wobei das Bauteil kein Tiegel ist, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei das Bauteil zumindest teilweise in Kontakt mit geschmolzenem Aluminium tritt.

Zudem betrifft die vorliegende Erfindung gemäß einem weiteren Aspekt ein Verfahren zur Herstellung von Bauteilen für eine Vorrichtung zum Gießen von Aluminiumformteilen, wobei die Bauteile solche sind, welche zumindest teilweise in Kontakt mit geschmolzenem Aluminium treten, wobei ein Ausgangsmaterial umfassend nitridgebundenes Siliziumnitrid zu einem Formteil umfassend nitridgebundenes Siliziumnitrid mit einer Dichte von 1,5 - 2,1 g/cm gebildet wird, wobei das nitridgebundene Siliziumnitrid unter Verwendung eines Gemisches von Siliziumnitrid und Siliziumpartikeln hergestellt wird, wobei die Siliziumpartikel einen D90-Wert kleiner 20 µm aufweisen.

Gemäß noch einem weiteren Aspekt betrifft die vorliegende Erfindung die Verwendung von nitridgebundenem Siliziumnitrid mit einer Dichte von 1,5 - 2,1 g/cm bei der Herstellung von Bauteilen für Vorrichtungen zum Gießen von Aluminiumformteilen, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile zumindest teilweise in Kontakt mit geschmolzenem Aluminium treten.

Weiterhin betrifft die vorliegende Erfindung die Verwendung von Bauteilen umfassend nitridgebundenes Siliziumnitrid mit einer Dichte von 1,5 - 2,1 g/cm in Vorrichtungen zum Gießen von Aluminiumformteilen, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile zumindest teilweise in Kontakt mit geschmolzenem Aluminium treten.

Weitere Aspekte der vorliegenden Erfindung sind den abhängigen Ansprüchen und der detaillierten Beschreibung sowie den Zeichnungen zu entnehmen.

### Detaillierte Beschreibung der Erfindung

In der vorliegenden Erfindung bezieht sich die Angabe "%" auf "Gew.%", soweit nichts anderes angegeben ist oder sich aus dem Sachverhalt ergibt.

Dichtes SN besteht in der Regel aus 85-90 Gew.% Si₃N₄ mit 10-15 Gew.% oxydischen Additiven. Es wird in einem kostenintensiven Gasdruck-Sinterprozess bei Temperaturen >1700 °C hergestellt. Versetzt man jedoch Si₃N₄ Pulver anstelle der oxydischen Additive mit metallischem Si-Pulver, z.B. im Verhältnis 70 Gew.%/30 Gew.% (SN/Si), so lassen sich die Rohstoffkosten deutlich reduzieren. Der notwendige Reaktionsprozess unter Stickstoff kann bei niedrigeren Temperaturen von 1300 - 1600°C, beispielsweise bei ca. 1450 °C, durchgeführt werden und ist somit deutlich günstiger als ein Gasdruck-Sinterprozess, da dieser mit einfachen Öfen durchgeführt werden kann. Damit lassen sich die Kosten weiter senken. Es entsteht der Werkstoff nitridgebundenes Siliziumnitrid (NSN) mit einem Festigkeitsniveau über dem des Aluminiumtitanats, jedoch ohne Riss-Systeme, die auf Dauer zu einer Zerrüttung führen können. Es wurde gefunden, dass NSN wie dichtes Siliziumnitrid nichtbenetzend im Verhältnis zu Aluminiumschmelzen ist. Es wurde zudem gefunden, dass durch eine Porosität von NSN eine gute Thermoschock-Wechselbeständigkeit bei der Herstellung von Aluminiumformteilen erzielt werden kann. Obwohl die Viskosität von flüssigem Silizium niedriger als die von Aluminium ist, wurde gefunden, dass die Porosität des Werkstoffes NSN kein Problem darstellt. Folglich eignet sich das NSN zur Verwendung bei der Herstellung von Bauteilen für Vorrichtungen zum Gießen von Aluminiumformteilen.

Zum Vergleich der verschiedenen in Aluminiumgießvorrichtungen verwendeten Werkstoffe mit NSN sind diese hier kurz gegenübergestellt:
Aluminiumtitanat weist eine exzellente Thermoschock- und Korrosionsbeständigkeit, eine geringe Benetzbarkeit durch Nichteisen-Schmelzen (NE-Schmelzen), eine geringe Festigkeit und eine geringe thermische Leitfähigkeit auf.

Siliziumnitrid hat demgegenüber eine exzellente Thermoschock- und Korrosionsbeständigkeit, eine geringe Benetzbarkeit durch NE-Schmelzen, eine hohe Festigkeit und eine mittlere thermische Leitfähigkeit.

Weitere Eigenschaften von ATi und gesintertem Siliziumnitrid (SSN - sintered silicon nitride) - hiermit ist dichtes Siliziumnitrid mit Sinterhilfsmitteln gemeint, wobei gemäß Stand der Technik dieses durch Gasdruck-Sinterprozesse mit Drücken von 10-2000 bar hergestellt wird - sind den Eigenschaften von NSN in Tabelle 1 gegenübergestellt. Zum Vergleich ist zudem anzumerken, dass reaktionsgebundenes Siliziumnitrid (RBSN, reaction bonded silicon nitride), welches aus reinem Si-Pulver durch einen Reaktionsprozess zu Si3N4 umgesetzt wird, einen billigen Rohstoff darstellt, jedoch durch einen langwierigen, exothermen Herstellungsprozess hergestellt werden muss, typischerweise eine Festigkeit von 200 - 300 MPa aufweist, sowie eine Dichte von 2,5 - 2,8 cm³. Zu beachten ist zudem, das nitridgebundenes Siliziumnitrid (NSN - Nitride bonded Silicon Nitride) aus einer Mischung aus Siliziumnitrid (SN) und Si-Pulver durch einen Reaktionsprozess hergestellt wird, ähnlich zu RBSN und im Gegensatz zum Sinterprozess für die Herstellung von SSN. NSN, nitridgebundenes Siliziumnitrid, unterscheidet sich vom RBSN darin, dass der Hauptbestandteil des Pulvers nicht aus Si besteht sondern aus einer Mischung von SN und Si Pulver. Die Hauptmatrix sind SN-Körner, die beispielsweise Partikelgrößen bis zu 10 µm haben. Diese Körner werden durch eine Beimischung von Si-Pulver in einem Reaktionsprozess, ähnlich wie bei RBSN, durch die Bildung von neuem Si₃N₄ gebunden. Daraus entsteht eine natürliche Porosität, beispielsweise in einem Bereich um 40 %. Hieraus ergibt sich auch eine unterschiedliche Festigkeit und Dichte zu RBSN, wie oben und nachfolgend in Tabelle 1 gezeigt.

**Tabelle 1: Charakteristische Eigenschaftswerte für Gießereiwerkstoffe**

| Eigenschaften | Temp. in °C | Einheit | Gusseisen | ATi | SSN | NSN |
|---|---|---|---|---|---|---|
| Dichte | 20 | g/cm³ | 7,2 - 7,8 | 3,30-3,35 | 3,20-3,25 | 1,5 - 2,1, z.B. 1,7 - 2,1 |
| Porosität | | Vol % | 0 - 1 | 8 - 12,5 | < 1 | > 20 |
| E-Modul | 20 | GPa | 100 | 10 - 20 | 290-300 | |
| Festigkeit | 20 | MPa | 200 | 20 - 40 | 700 und >700 | 40 - 60, z.B. 50 |
| Thermischer Ausdehnungskoeffizient | 20 - 800 | 10⁻⁶/K | 16 | < 1 | 2,8 - 3,2 | 2,8 - 3,2 |
| Thermische Leitfähigkeit | 20 | W/mK | 50 | 1.5 | 20 - 35 | 4 |
| Maximale Einsatztemperatur | | °C | | 1000 | 1100 + | 1100 + |

Zum weiteren Vergleich sind zudem die Vorteile und Nachteile von ATi und SSN in Tabelle 2 genannt, die ebenfalls bei Aluminiumgussvorrichtungen in Erwägung gezogen werden können.

**Tabelle 2: Wirtschaftlichkeit von Werkstoffen**

| | Vorteil | Nachteil |
|---|---|---|
| Gusseisen | sehr geringe Kosten, hohe Festigkeit | kein Kontakt mit der Schmelze zulässig, Schutzbeschichtung alle 2 Tage zu erneuern, kurze Standzeit (∼2 Wochen), Gefahr der Kontamination mit Fe |
| ATi | geringe Kosten, keine Schutzschichten, längere Standzeit (∼12 Wochen) | geringe Festigkeit |
| SSN | hohe Festigkeit, keine Schutzschichten, lange Standzeit (∼2 Jahre) | hoher Preis |
| NSN | höhere Festigkeit als ATI, niedrigere Kosten als SN, keine Schutzschichten notwendig, längere Standzeit | |

Gemäß einem Aspekt betrifft die Erfindung eine Vorrichtung zum Gießen von Aluminiumformteilen, die dazu ausgebildet ist, Aluminiumformteile herzustellen, wobei die Vorrichtung mindestens ein Bauteil aufweist, das nitridgebundenes Siliziumnitrid mit einer Dichte von 1,5 - 2,1 g/cm³ umfasst, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile umfassend nitridgebundenes Siliziumnitrid zumindest teilweise in Kontakt mit geschmolzenem Aluminium treten. Die Vorrichtung zum Gießen von Aluminiumformteilen, die dazu ausgebildet ist, Aluminiumformteile herzustellen, kann hierbei mindestens ein Bauteil aus nitridgebundenem Siliziumnitrid umfassen. Die Bauteile, die nitridgebundenes Siliziumnitrid umfassen bzw. daraus bestehen, sind solche Bauteile der Vorrichtung, die mit dem flüssigen Aluminium in Berührung kommen, und besonders bevorzugt ist das NSN in solchen Bauteilen in Kontakt mit dem flüssigen Aluminium. Gemäß bestimmten Ausführungsformen umfassen sämtliche Bauteile, die mit dem flüssigen Aluminium in Kontakt treten, NSN bzw. bestehen aus diesen, oder zumindest die Flächen der Bauteile, die mit dem flüssigen Aluminium in Kontakt kommen, umfassen NSN bzw. bestehen daraus. Die Bauteile, die nitridgebundenes Siliziumnitrid umfassen bzw. daraus bestehen, sind bevorzugt also zumindest teilweise in Kontakt mit geschmolzenem Aluminium. Hierbei sind Aluminiumformteile Teile, die durch Guss hergestellt werden und Aluminium umfassen oder daraus bestehen. Insbesondere sind Aluminiumformteile aus solchen Materialien, die NSN nicht benetzen.

Gemäß bestimmten Ausführungsformen umfasst die vorliegende Vorrichtung keinen Tiegel aus NSN, wie er in der WO2007/148986 offenbart ist.

Das nitridgebundene Siliziumnitrid ist porös, wobei die Porosität beispielsweise nach DIN Norm IEC 60672 Teil 2 bestimmt werden. Die theoretische Dichte von Si₃N₄ ohne Additive (100 %) beträgt 3,18 g/cm³. Damit entspricht eine maximale Dichte von 2,1 g/cm³ bei NSN einer theoretischen Dichte von 66 %. Typischer Weise liegt die Dichte von NSN zwischen 1,5 bis 2,1 g/cm³, beispielsweise zwischen 1,8 bis 2 g/cm³ und damit bei 56-62 % der theoretischen Dichte. Die Enddichte ist abhängig von der erreichten Dichte nach der Formgebung und verändert sich nur durch die Aufnahme von Stickstoff, da beim thermischen Prozess keine signifikante Volumenveränderung erfolgt. Durch die Porosität kann eine verbesserte Thermoschock-Wechselbeständigkeit bzw. Thermoschockbeständigkeit mit einer Aluminiumschmelze erzielt werden. Obgleich das NSN porös ist, kann gewährleistet werden, dass flüssiges Aluminium nicht in die Poren eindringen kann. Die Poren ergeben sich hierbei durch das Verpressen des Pulvers zu einem Formkörper. In der Regel kann man ca. 40 bis 70%, beispielsweise 45 bis 60 % der theoretischen Dichte durch das Verpressen erreichen. So kann beispielsweise bei einem Druck von 1500 t eine 600x600 mm Platte auf 1,5 g/cm³ gepresst werden (400 bar). Bei 2000 bar erreicht man Werte von >1,8 g/cm³. Dies entspricht 47 % bzw. 56 % der theoretischen Dichte (3,18 g/cm³). Zu berücksichtigen ist, dass sich für das NSN keine signifikante Sinterschwindung ergibt, sondern nur eine Gewichtszunahme durch die Umwandlung des Si mit N zu Si3N4, so dass das Porengefüge in etwa dem des Grünkörpers entsprechen kann. Die finale Porosität ergibt sich dann durch den Umwandlungsgrad des Si im Grünkörper zu Si₃N₄.

Das nitridgebundene Siliziumnitrid kann durch einen Reaktionsprozess unter Stickstoffatmosphäre hergestellt werden. Hierdurch kann die Herstellung eines homogenen Werkstoffs gewährleistet werden und das Einbringen von Verunreinigungen weitgehend vermieden werden, abgesehen von unvermeidbaren Verunreinigungen. Zudem kann durch die Verwendung einer Stickstoffatmosphäre die Reaktion des Siliziums zu Siliziumnitrid unter inerten Bedingungen bei geringen Kosten im Vergleich zu anderen Inertgasen gewährleistet werden. Bevorzugt umfasst die Atmosphäre bei der Reaktion daher mindestens 70 Vol.% Stickstoff, weiter bevorzugt mindestens 80 Vol.% Stickstoff, noch weiter bevorzugt mindestens 90 Vol.% Stickstoff und besteht besonders bevorzugt aus Stickstoff. Weiterhin ist die Atmosphäre bevorzugt inert und enthält insbesondere keinen Sauerstoff. Bei der Reaktion verbindet das aus Silizium und Stickstoff entstehende Siliziumnitrid die nicht reaktiven, bereits vorhandenen Siliziumnitridpartikel. Es entsteht also gemäß bestimmten Ausführungsformen ein homogener Werkstoff aus Siliziumnitrid. Der entstehende Werkstoff hat den Vorteil, dass man defekte NSN-Bauteile wieder aufmahlen kann und das daraus gewonnene Pulver wiederverwertbar sein kann. Somit kann man das NSN recyceln. Zur Herstellung von RBSN braucht man im Gegensatz hierzu immer frisches Si, und gesintertes SN mit Additiven kann nicht wieder recycelt werden.

Bei dem vorliegenden Herstellungsprozess von NSN bleiben die Siliziumnitridkörner, im Gegensatz zu einem Sinterprozess, unverändert. Dadurch, dass Si in Si₃N₄ umgewandelt wird, werden die Körner "verklebt".

Gemäß bestimmten Ausführungsformen können das Siliziumnitrid und Silizium in einem Verhältnis von 60 - 80 Gew.% : 40 - 20 Gew.%, bevorzugt 70 Gew.% : 30 Gew.% Si₃N₄ : Si, bezogen auf 100 Gew.% des Gemisches von Silizium und Siliziumnitrid, vor dem Reaktionsprozess gemischt werden. Hierdurch wird eine verbesserte Festigkeit des entstehenden NSN gewährleistet. Die bessere Festigkeit kann hierbei durch den höheren Si-Anteil erreicht werden. Dadurch entsteht mehr Si₃N₄ als "Bindephase", welches die vorhandenen Si₃N₄-Körner bzw. -partikel besser einbinden kann. Eine beispielhafte Methode zur Messung der Festigkeit ist die Biegeprüfung, wie sie z.B. in der DIN Norm 843 beschrieben ist. Das vor der Reaktion vorhandene Siliziumnitrid dient hierbei als Füllstoff, und die Festigkeit des fertigen Produkts kann durch die Reaktion des Si mit dem Stickstoff zu reaktionsgebundenem Siliziumnitrid (RBSN, reaction bonded silicon nitride) bestimmt werden, wobei bei einem zu hohem Füllstoffanteil keine Verfestigung ohne zusätzliche Additive erzielt werden kann. Bevorzugt werden solche Additive jedoch vermieden und das endgültige Bauteil besteht aus NSN. Die Festigkeit ist somit in Abhängigkeit von der Herstellbarkeit einzustellen und liegt unterhalb der von reinem RBSN, welches typische Festigkeiten zwischen 200 und 300 MPa aufweist.

Die Bauteile aus nitridgebundenem Siliziumnitrid und/oder das NSN enthalten bevorzugt weniger als 5 Gew.%, weiter bevorzugt keine, oxydischen Additive, bezogen auf das Gewicht des nitridgebundenem Siliziumnitrids. Durch das Fehlen von Glasphasenanteilen, die durch die oxydischen Additive erzeugt werden, kann eine verbesserte Nichtbenetzbarkeit für Aluminium erzielt werden, was die Verarbeitbarkeit des flüssigen Aluminiums in der Vorrichtung weiter verbessert.

Die Bauteile, die nitridgebundenes Siliziumnitrid umfassen bzw. daraus bestehen, sind erfindungsgemäß nicht besonders eingeschränkt, soweit sie in Vorrichtungen zum Aluminiumgießen verwendet werden können und keine Tiegel sind. Gemäß bestimmten Ausführungsformen umfasst die Vorrichtung mindestens ein Bauteil, das ausgewählt ist aus Düsen, Schiebern, Schutzhülsen, Rotorelementen, Trichtern und Rohren. Beispiele hierfür sind Dosier- und Steigrohre für pneumatisch fördernde Öfen, Angussdüsen im Übergang zu Kokillen, Düsen und Schieber zur Durchflussregelung, Schutzhülsen und Rotorelemente (Impeller) zur Schmelzbehandlung, Füllrohre, Sonderbauteile, Thermoelementschutzrohre zur Temperaturüberwachung, Gießdüsen, Eingusstrichter, und Schieberplatten.

Gemäß einem weiteren Aspekt betrifft die vorliegende Erfindung ein Bauteil für eine Vorrichtung zum Gießen von Aluminiumformteilen, die dazu ausgebildet ist, Aluminiumformteile herzustellen, wobei das Bauteil nitridgebundenes Siliziumnitrid mit einer Dichte von 1,5 - 2,1g/cm³ umfasst oder aus diesem besteht und kein Tiegel ist, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei das Bauteil zumindest teilweise in Kontakt mit geschmolzenem Aluminium tritt. Insbesondere ist das Bauteil kein Tiegel aus NSN, wie er in der WO2007/148986 offenbart ist. Bevorzugt besteht das Bauteil aus nitridgebundenem Siliziumnitrid. In diesen Bauteilen ist das nitridgebundene Siliziumnitrid porös. Gemäß bestimmten Ausführungsformen enthalten das Bauteil und/oder das nitridgebundene Siliziumnitrid weniger als 5 Gew.%, bevorzugt keine, oxydischen Additive. Weiterhin kann das Bauteil zumindest teilweise in Kontakt mit geschmolzenem Aluminium treten, ist also derart hergestellt, dass es für die Verwendung bei der Verarbeitung von Aluminiumschmelzen hergerichtet ist.

Zudem betrifft die Erfindung ein Verfahren zur Herstellung von Bauteilen für eine Vorrichtung zum Gießen von Aluminiumformteilen, wobei die Bauteile solche sind, welche zumindest teilweise in Kontakt mit geschmolzenem Aluminium treten, wobei ein Ausgangsmaterial umfassend nitridgebundenes Siliziumnitrid mit einer Dichte von 1,5 - 2,1 g/cm zu einem Formteil gebildet wird, wobei das nitridgebundene Siliziumnitrid unter Verwendung eines Gemisches von Siliziumnitrid und Siliziumpartikeln hergestellt wird, wobei die Siliziumpartikel einen D90-Wert kleiner 20 µm aufweisen. Bevorzugt wird hierbei kein Tiegel hergestellt und insbesondere keiner aus NSN, wie er in der WO2007/148986 offenbart ist.

Das Ausgangsmaterial ist hierbei nicht besonders beschränkt, so lange es nitridgebundenes Siliziumnitrid umfasst bzw. daraus besteht. Bevorzugt besteht das Ausgangsmaterial aus Siliziumnitrid, und weiter bevorzugt aus Siliziumnitridpulver mit einer Feinheit von D90 < 10 µm, beispielsweise <5 µm, bevorzugt < 2 µm, weiter bevorzugt < 1,8 µm und/oder D50 von <2 µm, beispielsweise <1,5 µm, bevorzugt <1 µm. Die Feinheit kann hierbei beispielsweise mit einem Mastersizer 2000 von Malvern gemäß ISO13320 ermittelt werden. Gegebenenfalls kann die Feinheit durch Mahlen des Ausgangsmaterials mit einem geeigneten Mahlverfahren, beispielsweise in Wasser, erfolgen.

Das Siliziumnitrid wird dann mit Silizium, bevorzugt in Form von Siliziumpartikeln/Siliziumpulver, gemischt. Gemäß bestimmten Ausführungsformen können das Siliziumnitrid und Silizium in einem Verhältnis von 60 - 80 Gew.% : 40 - 20 Gew.%, bevorzugt 70 Gew.% : 30 Gew.% Si₃N₄ : Si, bezogen auf 100 Gew.% des Gemisches von Silizium und Siliziumnitrid, gemischt werden, beispielsweise durch Rühren, ggf. in Wasser. Die Partikelgröße der zugegebenen Siliziumpartikel beträgt kleiner 20 µm für den D90-Wert, gemessen beispielsweise gemäß obigem Verfahren, damit keine Si-Klumpen oder Si-Pfropfen im Bauteil entstehen. Beispielhafte Partikelgrößen der Siliziumpartikel sind D90-Werte von < 10 µm und D10-Werte von < 2µm.

Zusätzlich erfolgt gemäß bestimmten Ausführungsformen die Zugabe von beispielsweise organischen Hilfsmitteln, um eine spätere Verpressbarkeit zu gewährleisten. Typische Hilfsmittel sind Binder wie Polyvinylalkohole (PVA), Presshilfsmittel wie Polyethylenglykole (PEG) und Gleitmittel wie Stearine, wobei diese jedoch nicht besonders beschränkt sind und auch andere Hilfsmittel zugegeben werden können. Gemäß bestimmten Ausführungsformen werden die Hilfsmittel als Zusätze zwischen 3 und 10 Gew.% zugegeben, bezogen auf die Mischung von Si und Siliziumnitrid, beispielsweise 4 bis 7 Gew.%.

Die Mischung wird dann gemäß bestimmten Ausführungsformen durch Wasserzugabe als ein wässriger Ansatz mit einem Feststoffgehalt von beispielsweise 40 bis 70 Gew.%, bevorzugt 55 bis 65 % Gew.% eingestellt und anschließend, beispielsweise unter Zuhilfenahme eines Sprühturms, zu einem Granulat getrocknet. Bei geringeren Feststoffgehalten ergibt sich eine längere Zeit zum Verdampfen des Wassers, während bei hohen Feststoffgehalten das Versprühen exponentiell erschwert wird. Aus dem Granulat kann dann ein Formteil gebildet werden. Da beispielsweise eine Pulveraufbereitung mit einem klassischen Sprühturm möglich ist, kann Kaltisostatpressen als Formgebungsverfahren, ähnlich wie bei ATi, verwendet werden.

Das Bilden des Formteils ist nicht besonders beschränkt und kann durch keramische Formgebungsverfahren wie beispielsweise Kaltisostatpressen, Trockenpressen, etc. erfolgen. Die Formteile können auch über ein Schlickergussverfahren hergestellt werden, wobei dies jedoch nicht bevorzugt ist. Bevorzugt ist Kaltisostatpressen, mit dem größere Wandstärken der Formteile gebildet werden können, was beispielsweise bei der Herstellung von Rohren wie Steigrohren vorteilhaft ist.

Das Kaltisostatpressen kann bei Drücken zwischen 300 und 2500 bar, bevorzugt 1000 bis 2200 bar, weiter bevorzugt 1500 und 2000 bar erfolgen, so dass beispielsweise Dichten zwischen 1,5 und 1,8 g/cm³ erreicht werden können. So ist es beispielsweise bei einem Druck von 400 bar möglich, eine Gründichte von 1,4-1,5 g/cm³ zu erzielen. Höhere Drücke führen generell zu höheren Gründichten. Bei 2000 bar können beispielsweise Gründichten von 1,8-1,9 g/cm³ erreicht werden. Besonders bevorzugt ist der Pressbereich 1500 bis 2000 bar. Durch höhere Enddichten lassen sich auch höhere Festigkeiten erzielen. Bei 400 bar ergibt sich beispielsweise eine Festigkeit <50 MPa, bei 2000 bar >50 MPa. Hierbei kann die Korngröße des Ausgangs-Siliziumnitrids eine wichtige Rolle spielen. So kann beispielsweise grobes Siliziumnitrid die Festigkeit erniedrigen, fein gemahlenes SN sie erhöhen.

Ein weiteres mögliches Formgebungsverfahren stellt das Trockenpressen dar, z.B. für plattenförmige Bauteile wie z.B. Schieberplatten, mit beispielsweise 0,8 bis 1,4 t/cm².

Weitere Formgebungsverfahren wie z.B. Extrusion, Schlickerguss sind auch denkbar und hängen im Wesentlichen nur von der Zusammensetzung, beispielsweise den organischen Hilfsmitteln, ab.

Gepresste Formteile, wie kaltisostatgepresste Formteile, können dann gegebenenfalls durch spanabhebende Verfahren auf Maß gebracht werden.

Das gepresste und eventuell bearbeitete Bauteil kann anschließend, beispielsweise in einem thermischen Prozess, entbindert werden. Der Prozess kann sich hierbei nach Größe, Wandstärke und Menge der Bauteile richten, wobei Entbinderungsprozesse in der Regel an das Bauteil angepasst werden können. Bedingt durch den Si Anteil kann die Entbinderung beispielsweise entweder unter Ausschluss von Sauerstoff bzw. bis 600 °C bzw. zur Verhinderung einer Oxidation des Si an Luft bis 300 °C erfolgen, wobei hier dann residualer Kohlenstoff durch Restbinder entstehen kann. Nach dem Austreiben des Binders kann dann ein Reaktionsprozess, mit Stickstoff bei Temperaturen zwischen 1300 und 1600 °C, bevorzugt zwischen 1400 und 1600 °C, weiter bevorzugt zwischen 1400 und 1500 °C, besonders bevorzugt zwischen 1400 und 1450 °C, erfolgen. Das Brennen kann beispielsweise in einer Stickstoffgas-Atmosphäre oder einer anderen InertgasAtmosphäre, welche Stickstoff umfasst, erfolgen. Bevorzugt umfasst die Atmosphäre bei der Reaktion mindestens 70 Vol.% Stickstoff, weiter bevorzugt mindestens 80 Vol.% Stickstoff, noch weiter bevorzugt mindestens 90 Vol.% Stickstoff und besteht besonders bevorzugt aus Stickstoff. Weiterhin ist die Atmosphäre bevorzugt inert und enthält insbesondere keinen Sauerstoff.

Danach können, gegebenenfalls nach Abkühlung, beispielsweise auf Raumtemperatur (z.B. zwischen 15 und 35°C, beispielsweise 20 - 25°C), Toleranzmaße gegebenenfalls durch eine Schleifbearbeitung angeglichen werden.

Darüber hinaus offenbart sind weiterhin die Verwendung von nitridgebundenem Siliziumnitrid mit einer Dichte von 1,5 - 2,1 g/cm zur Herstellung von Bauteilen für Vorrichtungen zum Gießen von Aluminiumformteilen, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile zumindest teilweise in Kontakt mit geschmolzenem Aluminium treten, sowie die Verwendung von Bauteilen umfassend nitridgebundenes Siliziumnitrid mit einer Dichte von 1,5 - 2,1 g/cm in Vorrichtungen zum Gießen von Aluminiumformteilen, wobei das nitridgebundene Siliziumnitrid porös ist, wobei die Poren derart gestaltet sind, dass ein flüssiges Aluminium nicht in die Poren des nitridgebundenen Siliziumnitrids eindringt, wobei die Bauteile zumindest teilweise in Kontakt mit geschmolzenem Aluminium treten. Die Bauteile sind bevorzugt wiederum keine Tiegel und insbesondere keine Tiegel, wie sie in der WO2007/148986 offenbart sind.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Im Folgenden wird die Erfindung nunmehr anhand beispielhafter Ausführungsformen dargestellt, die die Erfindung in keiner Weise beschränken.

Zur Herstellung eines Bauteils für eine Aluminiumgießvorrichtung wie beispielsweise eines Steigrohrs wird zunächst kommerziell erhältliches Siliziumnitrid-Pulver, wie z.B. S95L von Vesta oder Silzot HQ von Alzchem oder SN-9S von Denka, welche typische D50 Werte von 1-2 µm und D90 Werte von <10 µm zeigen, aufbereitet. Alternativ kann auch beispielsweise Grade S von H.C. Starck verwendet werden. Das Pulver kann entweder ohne Vermahlung verwendet werden bzw. wird bevorzugt auf eine Feinheit von D90 < 1,8 µm bzw. D50 von <1 µm in Wasser gemahlen. Die D50 und D90 Werte können hierbei mit kommerziellen Teilchengrößenmessgeräten z.B. von Cilas, Coulter-Beckmann, Malvern oder weiteren Anbietern gemessen werden. Die Messung erfolgt beispielsweise im Wasserbad mit Ultraschall-Unterstützung, beispielsweise gemäß ISO 13320. Auch eine Verwendung von feineren Pulvern, beispielsweise der gleichen Hersteller, ist möglich.

Nach der Mahlung wird in einem Rührbehälter Si (z.B. von Elkem oder Vesta mit Partikelgrößen < 20 µm) zugegeben. Der Anteil beträgt beispielsweise 30 Gew.%. Möglich sind auch andere Anteile von 20 bis 40 Gew%. Zusätzlich erfolgt die Zugabe von organischen Hilfsmitteln, um eine spätere Verpressbarkeit zu gewährleisten. Typische Hilfsmittel sind Polyvinylalkohole (PVA) als Binder, Polyethylenglykole (PEG) als Presshilfsmittel und Stearine als Gleitmittel. Typischerweise werden Zusätze zwischen 3 und 10 Gew% zugegeben, bezogen auf die Mischung von Si und Siliziumnitrid. Beispielsweise werden 4,8 Gew.%, bezogen auf die Gesamtmasse, hinzugegeben.

Die Mischung wird durch Wasserzugabe als ein wässriger Ansatz mit einem Feststoffgehalt von beispielsweise 55 bis 65 Gew.% eingestellt und anschließend unter Zuhilfenahme eines Sprühturms zu einem Granulat getrocknet.

Dieses Granulat wird zur Herstellung von Bauteilen, beispielsweise zur Herstellung von Steigrohren, aber auch Gießdüsen, Schieberplatten, etc. verwendet. Die Formgebung der Bauteile kann mit Kaltisostatpressen erfolgen, typischerweise bei Drucken zwischen 1500 und 2000 bar - wobei auch höhere Drücke oder niedrige Drücke denkbar sind - so dass beispielsweise Dichten zwischen 1,5 und 1,8 g/cm³ erreicht werden können. Ein weiteres mögliches Formgebungsverfahren stellt das Trockenpressen dar, z.B. für plattenförmige Bauteile wie z.B. Schieberplatten. Steigrohre werden beispielsweise jedoch meist durch Kaltisostatpressen hergestellt. Weitere Formgebungsverfahren wie z.B. Extrusion, Schlickerguss sind auch denkbar und hängen im Wesentlichen nur von der Zusammensetzung, beispielsweise den organischen Hilfsmitteln, ab.

Gepresste Formteile wie kaltisostatgepresste Formteile können dann gegebenenfalls durch spanabhebende Verfahren auf Maß gebracht werden.

Das gepresste und eventuell bearbeitete Bauteil wird anschließend beispielsweise in einem thermischen Prozess entbindert. Bedingt durch den Si Anteil kann die Entbinderung entweder unter Ausschluss von Sauerstoff bzw. bis 600 °C bzw. zur Verhinderung einer Oxidation des Si an Luft bis 300 °C erfolgen, wobei hier dann residualer Kohlenstoff durch Restbinder entstehen kann. Nach dem Austreiben des Binders erfolgt beispielsweise ein Reaktionsprozess mit Stickstoff bei Temperaturen zwischen 1400 und 1600 °C, bevorzugt bei 1400 bis 1450 °C.

Danach können, gegebenenfalls nach Abkühlung, beispielsweise auf Raumtemperatur (z.B. zwischen 15 und 35°C, beispielsweise 20 - 25°C), Toleranzmaße gegebenenfalls durch eine Schleifbearbeitung angeglichen werden.

Als konkretes Beispiel wird im Folgenden die Herstellung eines Dosierrohres umfassend NSN beschrieben.

Zunächst wurde ein kommerziell verfügbares Siliziumnitridpulver (Silzot® 7038 der Firma SKW, Deutschland; alternativ kann auch das Folgeprodukt Silzot® HQ der Nachfolgefirma Alzchem, Deutschland verwendet werden) auf eine Korngröße von D50=0,85 µm mit einem D90=1,86 µm wässrig mit einer Rührwerkskugelmühle LMK45 der Fa. Netzsch (Deutschland) aufgemahlen. Die Messung der Korngröße erfolgte mit einem Lasergranulometer Mastersizer 2000 der Firma Malvern (Deutschland). In einem Mischbehälter wurde dann metallisches Silizium-Pulver (Sicomill 4C von Vesta (Schweden); D50=11 µm, D90=25 µm laut Herstellerangabe) hinzugemischt. Das Verhältnis SN:Si betrug 70:30 Gew %, der Feststoffgehalt betrug 60 % Gew% in der wässrigen Suspension. Zur Mischung wurde PVA als Binder, PEG als Presshilfsmittel und Stearin als Gleitmittel zugemischt, so dass insgesamt 7 % organische Bestandteile im Schlicker enthalten waren. Diese Mischung wurde dann mittels eines Sprühturms (Fa. Newtech, Italien) zu einem pressfähigen Granulat getrocknet. Die Formgebung des Granulats erfolgte mittels Kaltisostatpressen bei 1600 bar. Das gepresste Bauteil wurde nach Ausbrennen der organischen Bestandteile bei 300 °C anschließend in einem Reaktionsbrand unter Stickstoff-Atmosphäre bei einer Temperatur von 1400 °C und einer Haltezeit von 3h getempert, um das vorhandene Silizium zu Siliziumnitrid umzuwandeln. Auf diese Weise wurde ein erfindungsgemäßes Dosierrohr hergestellt.

Durch die vorliegende Erfindung werden Bauteile umfassend nitridgebundenes Siliziumnitrid für die Aluminium-Gießereien bereitgestellt, wobei deutlich günstigere Kosten als bei der Verwendung von dichtem SN mit gleichzeitig erhöhter Standzeit gegenüber ATi ermöglicht werden, wobei die Kosten auch deutlich niedriger sind als die von gesintertem Siliziumnitrid.

Beim vorliegenden Verfahren entsteht zudem auf einfache Weise ein NSN-Bauteil, welches nach Verschleiß und Entfernen von Al wieder zu Füllstoff regeneriert/recycelt werden kann.

Ein weiterer Vorteil des vorliegenden Verfahrens ist, dass kein Gasdruck-Sintern erforderlich ist, dass keine Additive im Bauteil verwendet werden müssen, die verbleiben, und dass auch bei weniger Mahlen der Rohstoffe eine ausreichende Festigkeit erzielt werden kann.

## Patentansprüche

1. Vorrichtung zum Gießen von Aluminiumformteilen, die dazu ausgebildet ist, Aluminiumformteile herzustellen, wobei die Vorrichtung mindestens ein Bauteil aufweist, das nitridgebundenes Siliziumnitrid mit einer Dichte von 1,5 - 2,1 g/cm³ umfasst, wobei das nitridgebundene Siliziumnitrid porös ist, wobei ein flüssiges Aluminium nicht in die Poren des nitridgebundenen Siliziumnitrids eindringt, wobei die Bauteile umfassend nitridgebundenes Siliziumnitrid zumindest teilweise in Kontakt mit geschmolzenem Aluminium treten.

2. Vorrichtung gemäß Anspruch 1, wobei das nitridgebundene Siliziumnitrid unter Verwendung eines Gemisches von Siliziumnitrid und Siliziumpartikeln hergestellt wird, wobei die Siliziumpartikel einen D90-Wert kleiner 20 µm aufweisen.

3. Vorrichtung gemäß Anspruch 1 oder 2, wobei das nitridgebundene Siliziumnitrid durch Reaktion von Silizium in Anwesenheit von Siliziumnitrid unter Stickstoffatmosphäre hergestellt wird, bevorzugt durch einen thermischen Prozess.

4. Vorrichtung gemäß Anspruch 3, wobei das Siliziumnitrid und Silizium in einem Verhältnis von 60 - 80 Gew.% : 40 - 20 Gew.%, bevorzugt 70 Gew.%: 30 Gew.% SiN : Si, bezogen auf 100 Gew.% des Gemisches von Silizium und Siliziumnitrid, vor der Reaktion gemischt werden.

5. Vorrichtung gemäß einem der vorigen Ansprüche, wobei das nitridgebundene Siliziumnitrid weniger als 5 Gew.%, bevorzugt keine, oxydischen Additive enthält.

6. Vorrichtung gemäß einem der vorigen Ansprüche, wobei die Bauteile umfassend nitridgebundenes Siliziumnitrid mindestens eines aus Düsen, Schiebern, Schutzhülsen, Rotorelementen, Trichtern und Rohren, umfassen.

7. Bauteil für eine Vorrichtung zum Gießen von Aluminiumformteilen, die dazu ausgebildet ist, Aluminiumformteile herzustellen, wobei das Bauteil nitridgebundenes Siliziumnitrid mit einer Dichte von 1,5 - 2,1 g/cm³ umfasst oder aus diesem besteht und wobei das Bauteil kein Tiegel ist, wobei das nitridgebundene Siliziumnitrid porös ist, wobei ein flüssiges Aluminium nicht in die Poren des nitridgebundenen Siliziumnitrids eindringt, wobei das Bauteil zumindest teilweise in Kontakt mit geschmolzenem Aluminium tritt.

8. Bauteil gemäß Anspruch 7, wobei das nitridgebundene Siliziumnitrid unter Verwendung eines Gemisches von Siliziumnitrid und Siliziumpartikeln hergestellt wird, wobei die Siliziumpartikel einen D90-Wert kleiner 20 µm aufweisen.

9. Bauteil gemäß Anspruch 7 oder 8, wobei das Bauteil und/oder das nitridgebundene Siliziumnitrid weniger als 5 Gew.%, bevorzugt keine, oxydischen Additive enthalten.

10. Verfahren zur Herstellung von Bauteilen für eine Vorrichtung zum Gießen von Aluminiumformteilen, wobei die Bauteile solche sind, welche zumindest teilweise in Kontakt mit geschmolzenem Aluminium treten, wobei ein Ausgangsmaterial umfassend Siliziumnitrid zu einem Formteil umfassend nitridgebundenes Siliziumnitrid mit einer Dichte von 1,5 - 2,1 g/cm³ gebildet wird, wobei das nitridgebundene Siliziumnitrid unter Verwendung eines Gemisches von Siliziumnitrid und Siliziumpartikeln hergestellt wird, wobei die Siliziumpartikel einen D90-Wert kleiner 20 µm aufweisen.

11. Verfahren gemäß Anspruch 10, wobei das Bilden zu einem Formteil durch keramische Formgebungsverfahren erfolgt, und/oder wobei das Bauteil nach dem Bilden des Formteils bei einer Temperatur von 1300 - 1600 °C, bevorzugt 1400 - 1500 °C, in einer Stickstoffgas-Atmosphäre reagiert wird.

12. Verwendung von nitridgebundenem Siliziumnitrid mit einer Dichte von 1,5 - 2,1 g/cm³ bei der Herstellung von Bauteilen für Vorrichtungen zum Gießen von Aluminiumformteilen, wobei das nitridgebundene Siliziumnitrid porös ist, wobei ein flüssiges Aluminium nicht in die Poren des nitridgebundenen Siliziumnitrids eindringt, wobei die Bauteile zumindest teilweise in Kontakt mit geschmolzenem Aluminium treten.

13. Verwendung von Bauteilen umfassend nitridgebundenes Siliziumnitrid mit einer Dichte von 1,5 - 2,1 g/cm³ in Vorrichtungen zum Gießen von Aluminiumformteilen, wobei das nitridgebundene Siliziumnitrid porös ist, wobei ein flüssiges Aluminium nicht in die Poren des nitridgebundenen Siliziumnitrids eindringt, wobei die Bauteile zumindest teilweise in Kontakt mit geschmolzenem Aluminium treten.

## Claims

1. Device for casting aluminium shaped parts, which is formed to produce aluminium shaped parts, the device having at least one component which comprises nitride-bonded silicon nitride having a density of 1.5 - 2.1 g/cm³, the nitride-bonded silicon nitride being porous, a liquid aluminium not penetrating into the pores of the nitride-bonded silicon nitride, the components which comprise nitride-bonded silicon nitride coming into contact with molten aluminium at least in part.

2. Device according to claim 1, wherein the nitride-bonded silicon nitride is produced using a mixture of silicon nitride and silicon particles, the silicon particles having a D₉₀ of less than 20 µm.

3. Device according to either claim 1 or claim 2, wherein the nitride-bonded silicon nitride is produced by reacting silicon in the presence of silicon nitride under a nitrogen atmosphere, preferably by a thermal process.

4. Device according to claim 3, wherein the silicon nitride and silicon are mixed before the reaction in an SiN : Si ratio of 60 - 80 % by weight : 40 - 20 % by weight, preferably 70 % by weight : 30 % by weight, based on 100 % by weight of the mixture of silicon and silicon nitride.

5. Device according to any of the preceding claims, wherein the nitride-bonded silicon nitride contains less than 5 % by weight oxidic additives, preferably none.

6. Device according to any of the preceding claims, wherein the components comprising nitride-bonded silicon nitride include at least one of nozzles, slides, protective sleeves, rotor elements, funnels and pipes.

7. Component for a device for casting aluminium shaped parts, which is formed to produce aluminium shaped parts, wherein the component comprises or consists of nitride-bonded silicon nitride having a density of 1.5 - 2.1 g/cm³ and the component is not a crucible, the nitride-bonded silicon nitride being porous, a liquid aluminium not penetrating into the pores of the nitride-bonded silicon nitride, the components which comprise nitride-bonded silicon nitride coming into contact with molten aluminium at least in part.

8. Component according to claim 7, wherein the nitride-bonded silicon nitride is produced using a mixture of silicon nitride and silicon particles, the silicon particles having a D₉₀ of less than 20 µm.

9. Component according to either claim 7 or claim 8, wherein the component and/or the nitride-bonded silicon nitride contain less than 5 % by weight oxidic additives, preferably none.

10. Method for producing components for a device for casting aluminium shaped parts, the components being those which come into contact with melted aluminium at least in part, a starting material which comprises silicon nitride being formed into a shaped part comprising nitride-bonded silicon nitride having a density of 1.5 - 2.1 g/cm³, the nitride-bonded silicon nitride being produced using a mixture of silicon nitride and silicon particles, the silicon particles having a D₉₀ of less than 20 µm.

11. Method according to claim 10, wherein the forming into a shaped part takes place by ceramic shaping methods and/or wherein the component is reacted in a nitrogen gas atmosphere at a temperature of 1300 - 1600 °C, preferably 1400 - 1500 °C, after the formation of the shaped part.

12. Use of nitride-bonded silicon nitride having a density of 1.5 - 2.1 g/cm³ in the production of components for devices for casting aluminium shaped parts, wherein the nitride-bonded silicon nitride is porous, a liquid aluminium not penetrating into the pores of the nitride-bonded silicon nitride, the components coming into contact with molten aluminium at least in part.

13. Use of components comprising nitride-bonded silicon nitride having a density of 1.5 - 2.1 g/cm³ in devices for casting aluminium shaped parts, wherein the nitride-bonded silicon nitride is porous, a liquid aluminium not penetrating into the pores of the nitride-bonded silicon nitride, the components coming into contact with molten aluminium at least in part.

## Revendications

1. Dispositif de coulée de pièces moulées en aluminium, qui est conçu pour fabriquer des pièces moulées en aluminium, le dispositif présentant au moins un composant qui comprend du nitrure de silicium lié au nitrure avec une masse volumique de 1,5 à 2,1 g/cm³, le nitrure de silicium lié au nitrure étant poreux, l'aluminium liquide ne pénétrant pas dans les pores du nitrure de silicium lié au nitrure, les composants comprenant du nitrure de silicium lié au nitrure entrant en contact avec de l'aluminium fondu au moins de manière partielle.

2. Dispositif selon la revendication 1, dans lequel le nitrure de silicium lié au nitrure est fabriqué moyennant l'emploi d'un mélange de nitrure de silicium et de particules de silicium, les particules de silicium présentant un diamètre D₉₀ inférieur à 20 µm.

3. Dispositif selon la revendication 1 ou la revendication 2, dans lequel le nitrure de silicium lié au nitrure est fabriqué par une réaction du silicium en présence de nitrure de silicium sous une atmosphère d'azote, de préférence par un procédé thermique.

4. Dispositif selon la revendication 1, dans lequel le nitrure de silicium et le silicium sont mélangés avant la réaction dans un ratio SiN : Si de 60 à 80 % en poids : 40 à 20 % en poids, de préférence de 70 % en poids : 30 % en poids, par rapport à 100 % en poids de mélange de silicium et de nitrure de silicium.

5. Dispositif selon l'une des revendications précédentes, dans lequel le nitrure de silicium lié au nitrure contient moins de 5 % en poids, de préférence aucun, additif oxydant.

6. Dispositif selon l'une des revendications précédentes, dans lequel les composants comprenant du nitrure de silicium lié au nitrure comprennent au moins un élément parmi des buses, des poussoirs, des gaines de protection, des éléments tubulaires, des entonnoirs et des tuyaux.

7. Composant destiné à un dispositif pour la coulée de pièces moulées en aluminium, qui est conçu pour fabriquer des pièces moulées en aluminium, composant lequel comprend du nitrure de silicium lié au nitrure avec une masse volumique de 1,5 à 2,1 g/cm³ ou en est constitué, et composant lequel n'est pas un creuset, dans lequel le nitrure de silicium lié au nitrure est poreux, dans lequel l'aluminium liquide ne pénètre pas dans les pores du nitrure de silicium lié au nitrure, composant lequel entre en contact avec de l'aluminium fondu au moins de manière partielle.

8. Composant selon la revendication 7, dans lequel le nitrure de silicium lié au nitrure est fabriqué moyennant l'emploi d'un mélange de nitrure de silicium et de particules de silicium, les particules de silicium présentant un diamètre D₉₀ inférieur à 20 µm.

9. Composant selon la revendication 7 ou la revendication 8, le composant et/ou le nitrure de silicium lié au nitrure contenant moins de 5 % en poids, de préférence aucun, additif oxydant.

10. Procédé de fabrication de composants destinés à un dispositif de coulée de pièces moulées en aluminium, dans lequel les composants sont ceux qui entrent en contact avec l'aluminium fondu au moins de manière partielle, dans lequel un matériau de départ comprenant du nitrure de silicium est transformé en une pièce moulée comprenant du nitrure de silicium lié au nitrure avec une masse volumique de 1,5 à 2,1 g/cm³, dans lequel le nitrure de silicium lié au nitrure est fabriqué moyennant l'emploi d'un mélange de nitrure de silicium et de particules de silicium, dans lequel les particules de silicium présentent un diamètre D₉₀ inférieur à 20 µm.

11. Procédé selon la revendication 10, dans lequel la formation d'une pièce moulée a lieu par un procédé de moulage et/ou le composant réagit après la formation de la pièce moulée à une température de 1300 à 1600 °C, de préférence de 1400 à 1300 °C, dans une atmosphère d'azote gazeux.

12. Utilisation de nitrure de silicium lié au nitrure avec une masse volumique de 1,5 à 2,1 g/cm³ lors de la fabrication de composants pour des dispositifs de coulée de pièces moulées en aluminium, dans laquelle le nitrure de silicium lié au nitrure est poreux, dans laquelle l'aluminium liquide ne pénètre pas dans les pores du nitrure de silicium lié au nitrure, dans laquelle les composants entrent en contact avec de l'aluminium fondu au moins de manière partielle.

13. Utilisation de composants comprenant du nitrure de silicium lié au nitrure avec une masse volumique de 1,5 à 2,1 g/cm³ dans des dispositifs de coulée de pièces moulées en aluminium, dans laquelle le nitrure de silicium lié au nitrure est poreux, dans laquelle l'aluminium liquide ne pénètre pas dans les pores du nitrure de silicium lié au nitrure, dans laquelle les composants entrent en contact avec de l'aluminium fondu au moins de manière partielle.
